# EUROPEAN PATENT SPECIFICATION

(11) **EP 1 729 894 B1**
(45) Date of publication and mention of the grant of the patent: **31.10.2007**
(21) Application number: 05736036.4
(22) Date of filing: 18.03.2005
(51) Int. Cl.: B05D 7/24, C23C 16/50

(54) **COATING OF A POLYMER LAYER USING LOW POWER PULSED PLASMA IN A PLASMA CHAMBER OF A LARGE VOLUME**
BESCHICHTUNG EINER POLYMERSCHICHT UNTER VERWENDUNG VON NIEDERDRUCKGEPULSTEM PLASMA IN EINER PLASMAKAMMER MIT EINEM GROSSEN VOLUMEN
REVETEMENT D'UNE COUCHE POLYMERE AU MOYEN DE PLASMA PULSE A FAIBLE TAUX DE POUDRE DANS UNE CHAMBRE DE DEPOT EN PHASE VAPEUR ACTIVE PAR PLASMA A GRAND VOLUME

(30) Priority: 18.03.2004 GB 0406049
(43) Date of publication of application: 13.12.2006
(73) Proprietor: THE SECRETARY OF STATE FOR DEFENCE, Salisbury Wiltshire SP4 0JQ (GB)
(72) Inventor: COULSON, Stephen Richard, Salisbury, Wiltshire SP4 0JQ (GB); BURNETT, Ian, Winscombe, North Somerset BS25 1JB (GB); SAMBELL, John Henry, c/o JLS Designs Ltd, Bancombe Rd, Somerton, Somerset TA8 6BS (GB)
(74) Representative: Farnsworth, Alastair Graham
(86) International application number: PCT/GB2005/001017
(87) International publication number: WO 2005/089961

(56) References cited:
- WO-A-98/58117
- WO-A-02/094906
- WO-A-03/090939
- WO-A-20/04088710

## Description

The present invention relates to the coating of surfaces, in particular to the production of oil- and water- repellent surfaces, as well as to coated articles obtained thereby.

Oil- and water- repellent treatments for a wide variety of surfaces are in widespread use. For example, it may be desirable to impart such properties to solid surfaces, such as metal, glass, ceramics, paper, polymers etc. in order to improve preservation properties, or to prevent or inhibit soiling.

A particular substrate which requires such coatings are fabrics, in particular for outdoor clothing applications, sportswear, leisurewear and in military applications. Their treatments generally require the incorporation of a fluoropolymer into or more particularly, fixed onto the surface of the clothing fabric. The degree of oil and water repellency is a function of the number and length of fluorocarbon groups or moieties that can be fitted into the available space. The greater the concentration of such moieties, the greater the repellency of the finish.

In addition however, the polymeric compounds must be able to form durable bonds with the substrate. Oil- and water-repellent textile treatments are generally based on fluoropolymers that are applied to fabric in the form of an aqueous emulsion. The fabric remains breathable and permeable to air since the treatment simply coats the fibres with a very thin, liquid-repellent film. In order to make these finishes durable, they are sometimes co-applied with cross-linking resins that bind the fluoropolymer treatment to fibres. Whilst good levels of durability towards laundering and dry-cleaning can be achieved in this way, the cross-linking resins can seriously damage cellulosic fibres and reduce the mechanical strength of the material. Chemical methods for producing oil- and water-repellent textiles are disclosed for example in WO 97/13024 and British patent No 1,102,903 or M. Lewin et al., 'Handbood of Fibre Science and Technology' Marcel and Dekker Inc., New York, (1984) Vol 2, Part B Chapter 2.

Plasma deposition techniques have been quite widely used for the deposition of polymeric coatings onto a range of surfaces. This technique is recognised as being a clean, dry technique that generates little waste compared to conventional wet chemical methods. Using this method, plasmas are generated from organic molecules, which are subjected to an electrical field. When this is done in the presence of a substrate, the radicals and molecules of the compound in the plasma polymerise in the gas phase and react with a growing polymer film on the substrate. Conventional polymer synthesis tends to produce structures containing repeat units which bear a strong resemblance to the monomer species, whereas a polymer network generated using a plasma can be extremely complex.

WO98/58117 describes the formation of oil or water repellent coatings on a surface using monomeric unsaturated organic compounds, and in particular unsaturated halocarbons, which are polymerised on the surface using a plasma deposition process. This process produces good oil and water repellent coatings, and this is illustrated using small-scale units of 470cm³. WO 03/090939 discloses a similar plasma coating process carried out in a chamber of 0.3 m³.

For most commercial applications much larger scale production units are required. However, initial trials revealed that replication of the conditions used in the small-scale unit in larger chambers did not produce satisfactory results.

According to the present invention, there is provided a method for depositing a polymeric material onto a substrate, said method comprising introducing an monomeric material in a gaseous state into a plasma deposition chamber in which a plasma zone has a volume of at least 0.5 m³ igniting a glow discharge within said chamber, and applying a voltage as a pulsed field, at a power of from 0.001 to 500w/m³ for a sufficient period of time to allow a polymeric layer to form on the surface of the substrate.

As used herein, the expression "in a gaseous state" refers to gases or vapours, either alone or in mixture, as well as aerosols.

These conditions are particularly suitable for depositing good quality oil and water repellent surfaces of uniform thickness, in large chambers where the plasma zone has a volume of 0.5m³ or more, such as from 0.5m³-10m³ and suitably at about 1m³. The layers formed in this way have good mechanical strength and remain substantially in place, through a conventional washing process.

The power levels, and particularly the power densities, that give the best results are lower than those conventionally used in this type of process. This is quite unexpected. In particular the power is applied at from 0.001 to 100w/m³, suitably from 0.01 to 10w/m³.

The dimensions of the chamber will be selected so as to accommodate the particular substrate being treated, but in general will be of a reasonably large size, to accommodate plasma zones having the volumes described above. For instance, generally cuboid chambers may be suitable for a wide range of applications, but if necessary, elongate or rectangular chambers may be constructed, for example where the substrates are generally of this profile, such as wood, rolls of fabric etc. Sheet materials can be processed using a "roll to roll" arrangement.

The chamber may be a sealable container, to allow for batch processes, or it may comprise inlets and outlets for substrates, to allow it to be utilised in a continuous process. In particular in the latter case, the pressure conditions necessary for creating a plasma discharge within the chamber are maintained using high volume pumps, as is conventional for example in a device with a "whistling leak".

In particular, the monomeric material is a material as described in WO98/58117. Specifically, it comprises an organic compound, which comprises a chain of carbon atoms, at least some of which are preferably substituted by halogen.

In particular, the compounds are unsaturated and so contain at least one double bond or triple bond that is capable of reacting to form a polymeric compound. Preferably the compounds contain at least one double bond.

By "chain" is meant that the carbon atoms form straight or branched chains. Suitably, the chains are not cyclic. The compounds used in the method of the invention include at least one such chain. Suitable chains have from 3 to 20 carbon atoms, more suitably from 6 to 12 carbon atoms

Monomeric compounds used in the method may include a double or triple bond within a chain and so comprise an alkene or alkyne respectively. Alternatively, the compounds may comprise an alkyl chain, optionally substituted by halogen, as a substituent which is attached to an unsaturated moiety either directly or by way of an functional group, such as a ester or sulphonamide group.

As used therein the term "halo" or "halogen" refers to fluorine, chlorine, bromine and iodine. Particularly preferred halo groups are fluoro. The term "aryl" refers to aromatic cyclic groups such as phenyl or napthyl, in particular phenyl. The term "alkyl" refers to straight or branched chains of carbon atoms, suitably of up to 20 carbon atoms in length. The term "alkenyl" refers to straight or branched unsaturated chains suitably having from 2 to 20 carbon atoms.

Monomeric compounds where the chains comprise unsubstituted alkyl or alkenyl groups are suitable for producing coatings which are water repellent. By substituting at least some of the hydrogen atoms in these chains these chains with at least some halogen atoms, oil repellency may also be conferred by the coating.

Thus in a preferred aspect, the monomeric compounds include haloalkyl moieties or comprise haloalkenyls. Therefore, preferably the plasma used in the method of the invention will comprise a monomeric unsaturated haloalkyl containing organic compound.

Examples of monomeric organic compounds for use in the process of the invention are compounds of formula (I) 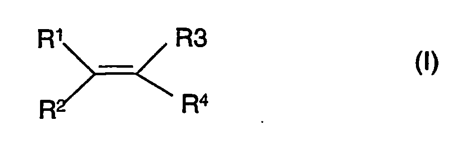 where R¹, R² and R³ are independently selected from hydrogen, alkyl, haloalkyl or aryl optionally substituted by halo;
provided that at least one of R¹, R² or R³ is hydrogen, and
R⁴ is a group X-R⁵ where R⁵ is an alkyl or haloalkyl group and X is a bond; a group of formula -C(O)O(CH₂)ₙY- where n is an integer of from 1 to 10 and Y is a bond or a sulphonamide group;
or a group -(O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0.

Suitable haloalkyl groups for R¹, R², R³ and R⁵ are fluoroalkyl groups. The alkyl chains may be straight or branched and may include cyclic moieties.

For R⁵, the alkyl chains suitably comprise 2 or more carbon atoms, suitably from 2-20 carbon atoms and preferably from 6 to 12 carbon atoms.

For R¹, R² and R³, alkyl chains are generally preferred to have from 1 to 6 carbon atoms.

Preferably R⁵ is a haloalkyl, and more preferably a perhaloalkyl group, particularly a perfluoroalkyl group of formula CₘF₂ₘ₊₁ where m is an integer of 1 or more, suitably from 1-20, and preferably from 6-12 such as 8 or 10.

Suitable alkyl groups for R¹, R² and R³ have from 1 to 6 carbon atoms.

Preferably however, at least one of R¹, R² and R³ is hydrogen and preferably R¹, R², R³ are all hydrogen.

Where X is a group -C(O)O(CH₂)ₙY-, n is an integer which provides a suitable spacer group. In particular, n is from 1 to 5, preferably about 2.

Suitable sulphonamide groups for Y include those of formula - N(R⁷)SO₂⁻ where R⁷ is hydrogen or alkyl such as C₁₋₄alkyl, in particular methyl or ethyl.

In one embodiment, the compound of formula (I) is a compound of formula (II)

CH₂=CH-R⁵ (II)

where R⁵ is as defined above in relation to formula (I).

In compounds of formula (II), X in formula (I) is a bond.

However in a preferred embodiment, the compound of formula (I) is an acrylate of formula (III)

CH₂=CR⁷C (O) O (CH₂) ₙR⁵ (III)

where n and R⁵ as defined above in relation to formula (I) and R⁷ is hydrogen, C₁₋₁₀alkyl, or C₁₋₁₀haloalkyl. In particular R⁷ is hydrogen or C₁₋₆alkyl such as methyl. A particular example of a compound of formula (III) is a compound of formula (IV) 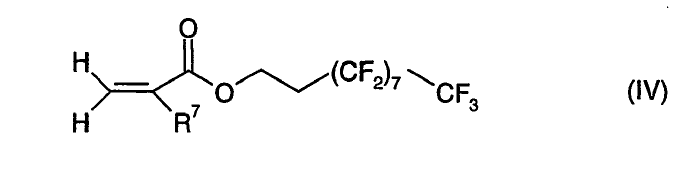 where R⁷ is as defined above, and in particular is hydrogen and x is an integer of from 1 to 9, for instance from 4 to 9, and preferably 7. In that case, the compound of formula (IV) is 1H, 1H, 2H, 2H-heptadecafluorodecylacylate.

Using these compounds in the process of the invention, coatings with good water hydrophobicity and oleophobicity values are achieved. These properties can be tested using "3M Test Methods" such as the 3M oil repellency Test I, (3M Test Methods Oct.1, 1988) and a water repellency test, (the 3M water repellency Test II, water/alcohol drop test, 3M Test 1, 3M Test Methods, October 1, 1998). These tests are designed to detect a fluorochemical finish on all types of fabrics by measuring:
(a) aqueous stain resistance using mixture of water and isopropyl alcohol.
(b) the fabric's resistance to wetting by a selected series of hydrocarbon liquids of different surface tensions.

These tests are not intended to give an absolute measure of the fabric's resistance to staining by watery or oily materials, since other factors such as fabric construction, fibre type, dyes, other finishing agents, etc., also influence stain resistance. These tests can, however, be used to compare various finishes. The water repellency tests comprises placing 3 drops of a standard test liquid consisting of specified proportions of water and isopropyl alcohol by volume onto the plasma polymerised surface. The surface is considered to repel this liquid if after 10 seconds, 2 of the 3 drops do not wet the fabric. From this, the water repellency rating is taken as being the test liquid with the greater proportion of isopropyl alcohol which passes the test. In the case of the oil repellency test, 3 drops of hydrocarbon liquid are placed on the coated surface. If after 30 seconds no penetration or wetting of the fabric at the liquid-fabric interface occurs and no wicking around 2 of the 3 drops is evident, then the test is passed.

The oil repellency rating is taken to be the highest-numbered test liquid which does not wet the fabric surface (where the increasing number corresponds to decreasing hydrocarbon chain and surface tension).

The results obtained using these tests are variable depending upon the nature of the substrate, and in particular the roughness of the substrate, but certain products obtained using the method of the invention have achieved water hydrophobicity values of up to 10 and oleophobicity values of 8 by means of large scale production. In fact, some coated materials has shown repellency to heptane and pentane, which represents a degree of oleophobicity which is off the normal 3M scale.

Other compounds of formula (I) are styrene derivatives as are well known in the art of polymerisation.

Suitable plasmas for use in the method of the invention include non-equilibrium plasmas such as those generated by radiofrequencies (Rf), microwaves or direct current (DC). They may operate at atmospheric or sub-atmospheric pressures as are known in the art. In particular however, they are generated by radiofrequencies (Rf).

The gas supplied to the plasma chamber may comprise a vapour of the monomeric compound alone, but preferably, it is combined with a carrier gas, in particular, an inert gas such as helium or argon. In particular helium is a preferred carrier gas as this minimises fragmentation of the monomer.

The ratio of the monomeric gas to the carrier gas is suitably in the range of from 100:1 to 1:100, for instance in the range of from 10:1 to 1:100, and in particular about 1:1 to 1:10, such as at about 1:5. This helps to achieve the high flow rates required by the process of the invention. Suitably the gas or gas mixture is supplied at a rate of at least 1 standard cubic centimetre per minute (sccm) and preferably in the range of from 1 to 100sccm.

Gases are suitably drawn into the chamber as a result of a reduction in the pressure within the chamber as a result of a evacuating pump, or they may be pumped into the chamber.

Polymerisation is suitably effected using vapours of compounds of formula (I) in the chamber, which are maintained at pressures of from 0.01 to 300 mbar, suitably at about 80-100mbar.

A glow discharge is then ignited by applying a high frequency voltage, for example at 13.56MHz. This is suitably applied using electrodes, which may be internal or external to the chamber, but in the case of the larger chambers are preferably internal.

The applied fields are suitably of power of up to 500W, suitably at about 40W, applied as a pulsed field. The pulses are applied in a sequence which yields very low average powers, for example in a sequence in which the ratio of the time on : time off is in the range of from 1:500 to 1:1000. Particular examples of such sequence are sequences where power is on for 20µs and off for from 1000µs to 20000µs. Typical average powers obtained in this way are 0.04W.

The fields are suitably applied from 30 seconds to 90 minutes, preferably from 5 to 60 minutes, depending upon the nature of the compound of formula (I) and the substrate etc.

Plasma polymerisation of compounds of formula (I), particularly at average powers much lower than previously used, has been found to result in the deposition of highly fluorinated coatings which exhibit high levels of hydrophobicity and oleophobicity, even when produced on a large scale. In addition, a high level of structural retention of the compound of formula (I) occurs in the coating layer, which may be attributed to the direct polymerisation of the alkene monomer for instance a fluoroalkene monomer via its highly susceptible double bond.

It has been noted, particularly in the case of the polymerisation of compounds of formula (III) above, that low power pulsed plasma polymerisation produces well-adhered coatings which exhibit excellent water and oil repellency. Furthermore, the coatings are of a good uniform thickness.

The greater level of structural retention can be attributed to free radical polymerisation occurring during the duty cycle off-time and less fragmentation during the on-time.

The gas is suitably supplied to the chamber by way of a temperature gradient. For example, gas is pumped along a heated pipe leading from a gas supply to the plasma chamber. The pipe is suitably heated such that the temperature of gas entering the chamber is from 30 to 60°C, depending upon the nature of the monomer used. In particular, the temperature of the gas entering the chamber is higher, preferably about 10°C higher, than the gas leaving the supply. The supply is suitably kept at ambient temperature, or slightly elevated temperature such as 30°C, again depending upon the nature of the monomer involved.

Using heating of the supply pipes and chamber in this way, the applicants have found that the monomer vapour is transported efficiently into the chamber, and once in the chamber, remains mobile. This leads to efficient deposition and polymerisation of monomer, and minimises any condensation of gas, which may occur in "cold spots" of the pipework. Although heating of the chamber has been used previously in plasma etching processes in order to keep etch products mobile, so that they can be evacuated from the chamber, such a process is not required in the present instance, and therefore it is unexpected that heating is preferred.

Novel apparatus for use in the method described above, form a further aspect of the invention. Specifically, the apparatus comprises a plasma deposition chamber, a pumping system arranged to feed monomer in gaseous form into the chamber, at least two electrodes arranged so as to ignite a plasma within the chamber, and power control means programmed to pulse power supplied to the electrodes so as to produce a plasma at a power of from 0.001 to 500w/m³ within a plasma zone within the chamber.

The pumping system is suitably one which can supply large amounts of vapours into the chamber, and to ensure that this remains in the chamber for the minimum adequate residence time, to achieve the desired effect. It may comprise a series of pumps, and large conductance pipes. The pumping system may also be arranged to draw gas out of the chamber to evacuate air, and/or reduce the pressure, as required.

In a particular embodiment, the pumping system comprises two pumps. A first pump or roots pump, which is suitably a high volume pump, is arranged to evacuate any vapours including water vapour or other contaminants from the chamber. In order to do this efficiently, and in a reasonable timeframe, bearing in mind the size of the chamber, the pump is suitably arranged close to the chamber, and connected to it by way of a single straight pipe, with as large a diameter as possible. A valve is provided in the pipe so that once the chamber has been evacuated, it can be sealed.

A second pump is suitably a lower volume pump, such as a dry rotary pump. This is suitably connected to the chamber by the same opening as the first pump. It is arranged so that it can draw monomer, together with any carrier gas into the chamber at a suitable rate, and maintain the desired pressure and residence time of gas within the chamber.

The pumping means suitably vents to a furnace where any remaining monomer or fragments therefore, are incinerated before the gases safely pass into the atmosphere.

Preferably the apparatus further comprises heating means for the chamber. These may be integral with the walls of a chamber, or present in a casing surrounding the chamber. They may comprise electrical elements or recirculated, heated oil filled elements, suitably under the control of a temperature controller, to ensure that the desired temperature is maintained within the chamber.

Preferably also the apparatus comprises a container for monomer, which is connected to the chamber by a suitable pipe and valve arrangement. Preferably, this container is provided with a heater, which will allow the monomer to be heated above ambient temperature, if required, before being introduced into the chamber. Preferably the container, the pipe leading from it to the chamber and the chamber itself are all heated, and the heating means are arranged to produce an increasing temperature gradient along the path of the monomer.

A supply of carrier gas may, if required, be connected to the container and gas from this supply can be passed into the container if required, in order to produce a sufficient flow of gas into the chamber to produce the desired result.

In use, in a batch process, the items to be coated are introduced into the chamber. In a particular embodiment, these are ready made garments, to which a water and/or oil repellent coating is to be applied. By depositing the polymer to the finished garment, rather than to the fabric used in the production, an "all over" coating is achieved, including areas such as zips, fasteners or stitched joints, which would otherwise remain uncoated.

The chamber is then evacuated, for instance using the entire pump suite, but in particular the large roots pump where provided. Once the chamber is evacuated, monomer vapour, which is suitably warmed, is fed into it from the container. This is achieved for instance, by drawing using a second pump from a container in which a supply of liquid monomer is held. This container is suitably heated to a temperature sufficient to cause vaporisation of the monomer.

Preferably also the pipes and conduits which lead from the container to the chamber are also heatable. This means that it is possible to ensure that monomer is not lost through condensation in the feed pipes.

If desired, a carrier gas, which may be an inert gas such as argon or helium, and preferably helium may be fed through the chamber in order to provide a sufficient gas flow to achieve the desired concentrations and volume homogeneity of monomer in the chamber.

Alternatively, monomer vapour may be drawn from the container and subsequently mixed with the carrier gas. Preferably prior to mixing, the monomer vapour is passed through a liquid/vapour flow controller. This arrangement allows more controllable mixing to achieve the desired ratio of carrier gas : monomer. In addition, the environment of the monomer, and in particular the temperature, may be controlled independently of the flow requirements. Furthermore, reactive monomers may suitably be stored in the container under an inert atmosphere for example, a nitrogen atmosphere. Suitably the container may be pressurised, so that the nitrogen is above atmospheric pressure, so as to assist the flow of monomer vapour from the container into the chamber, which is at lower pressure.

A glow discharge is then ignited within the chamber for instance by applying a voltage such as a high frequency voltage, for example at 13.56MHz. Thereafter, the power is pulsed as described above, so as to produce a low average power. As a result, a monomer becomes activated and attaches to the surface of the substrate, whereupon it builds up a polymeric layer. At the low powers used in the method of the invention, unsaturated monomers form uniform layers of high structural integrity. The effect of this depends upon the nature of the monomer being used, but the specific examples provided above can give excellent hydrophobicity and/or oleophobicity.

The invention will now be particularly described by way of example with reference to the accompanying diagrammatic drawings in which:
Figure 1 is a diagrammatic representation of a monomer supply system which can be used in an embodiment of the invention;
Figure 2 is a diagrammatic representation of a pumping system which can be used in an embodiment of the invention; and
Figure 3 is a diagrammatic representation of alternative apparatus which can be used in an embodiment of the invention.

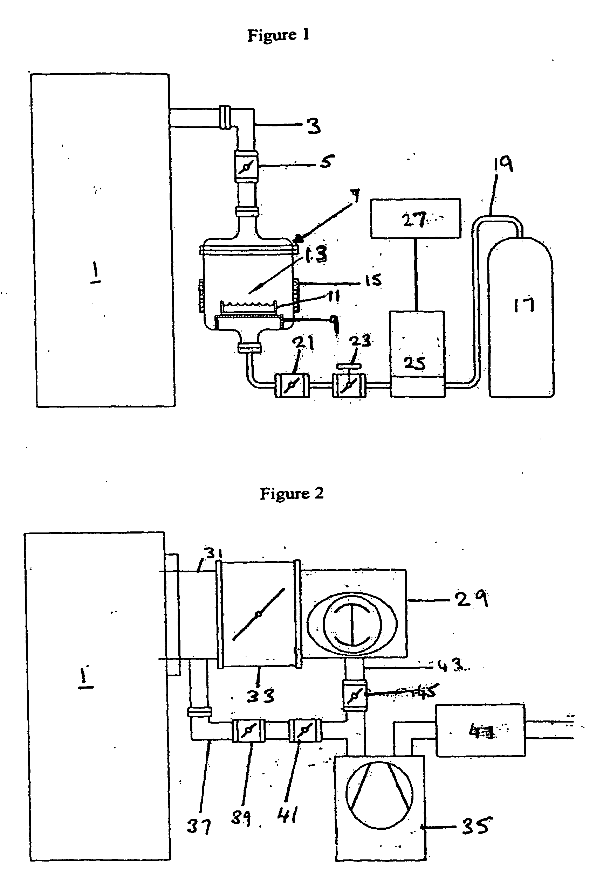

The apparatus illustrated in Figure 1 shows a process system containing a plasma chamber (1). Recirculated heated oil filled heating elements are incorporated into outer walls of the plasma chamber (1). The temperature within the chamber is measurable by a thermocouple (not shown), and this information feeds to the controls for the heater, so that the required temperature can be maintained within the plasma chamber (1). Also within the plasma chamber, a pair of facing electrodes are provided, which define between them a plasma zone of approximately 1m³. The electrodes are connected to a suitable power supply which is controllable and programmable.

A monomer delivery pipe (3) which incorporates a valve (5) feeds into the plasma chamber (1). A sealable chamber (7) for monomer is provided at the end of the pipe (3). Within the chamber (7) is arranged a support (9) on which an open container (11) for monomer (13) can be positioned. The chamber (7) is provided with a controllable heater, for instance a band heater (15), extending around the chamber (7).

In addition, a supply of inert gas (17), such as argon or helium, is connected to the chamber (7) by means of a pipe (19) in which are provided a valve (21) and a manual valve (23) together with a mass flow controller (25). The gas supply is controllable and can be observed by means of a display (27).

The plasma chamber (1) is provided with a pump arrangement illustrated diagrammatically in Figure 2. This comprises a roots and rotary pump combination, arranged to evacuate the chamber. A roots pump (29) is connected to the plasma chamber by means of a pipe (31) which is preferably straight and which has as large a diameter as possible. In this case the diameter of the pipe is 160mm. By ensuring that there are no bends in the pipe (31), the conductance loss can be minimised. An isolation valve (33) is provided in the pipe (31) so as to isolate the pump (29) from the plasma chamber.

A low volume rotary pump (35) is also provided and is connectable to the pipe (31) downstream of the valve (33), by means of a smaller pipe (37), for instance of 63mm diameter, provided with an automatic pressure control (APC) valve (39) and an isolation valve (41). A flexible by-pass pipe (43), which is also provided with a valve (45), connects the roots pump (29) directly to the rotary pump (35).

Finally, a furnace (47) is provided downstream of the rotary pump (35), which is provided so as to incinerate any gases venting out of the system.

The combination of roots and rotary pump illustrated provides an overall pumping speed of the order of 350m³/hour, which allows for rapid pumpdown of the plasma chamber.

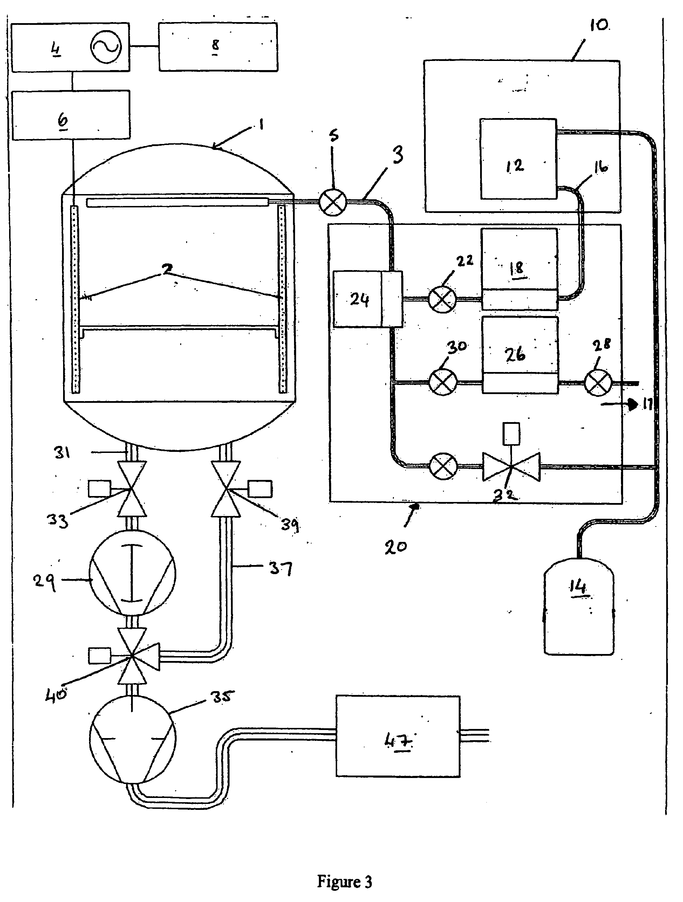

An alternative arrangement is illustrated in Figure 3. In this illustration, the electrodes (2) within the chamber (1) are shown. These are electrically connected to an RF generator (4), by way of an RF matching unit (6). The RF generator (4) is controlled by a function generator (8) which is set to produce pulses in the RF field as described above. The RF matching unit ensures that the pulsing within the chamber (1) is in line with that produced within the generator (4).

In this instance, the pump system is slightly different in that the roots pump (29) and rotary pump (35) are interconnected by a single 3-way process/roughing selector valve (40) that replaces the valves 41 and 45 of the Figure 2 embodiment. The pipe (37) containing the process pressure control valve 39 also connects to this valve. As a result, the combination roots and rotary pump can be used to draw gases through the process chamber (1) and vent them to the furnace (47) in a broadly similar manner to that described above in relation to Figures 1 and 2. Rapid evacuation of gas from within the chamber can be carried out by opening valves 33 and 40 and operating the pump (29) and, if required, also the pump (35). However, the roots pump (29) can be isolated from the system by closure of valves (33) and adjustment of valve (40), and more controlled flow of gas through the chamber induced by the use of pump (35), which draws gas through pipe (37) when valve (39) is open.

In this apparatus also, the monomer feed arrangement is also modified to make it more controllable. Specifically, a separate monomer handling unit (10) is provided. This comprises a monomer reservoir (12), in which monomer can be kept under controlled environment conditions. For instance, the monomer can be kept in the dark, under an atmosphere of inert gas such as nitrogen, which is supplied from a suitable gas supply (14). These conditions minimise the chances that the monomer will prematurely polymerise.

Monomer is able to feed out of the reservoir (12) through a pipe (16) leading downwards from the monomer container (11) (not shown in this instance). This flow may be assisted by maintaining the pressure of inert gas within the reservoir at something above atmospheric pressure so as to create a pressure differential. A nitrogen bleed valve (32) is also provided in the system.

The pipe (16) suitably carries monomer into a liquid/vapour flow controller (18) which is contained within a temperature controlled gas unit (20). The temperature within the controller (18) is monitored and controlled to ensure that any condensed monomer is evaporated, and the vapour at the required concentration leaves the controller via a valve (22), where it enters a gas injector unit (24).

Within that unit, the monomer vapour is mixed with the required amount of carrier gas, such as helium, which is fed into the injector unit (24) from a suitable supply (17) by way of a helium mass flow controller (26). Valves (28, 30) can be used to isolate the helium supply (17) if required. The temperature of the controller (26) can be independently controlled so that gas at the appropriate pressure to achieve the desired mixture is supplied to the injector unit (24). Mixtures produced in the injector unit (24) are fed into the chamber (1) via pipe (3) which is closable by valve (5) in a similar manner to that described in relation to Figure 1.

### Example 1

A pillowcase was suspended within a plasma chamber of the apparatus of Figure 1 and Figure 2, between the electrodes and therefore within the plasma zone. In addition a sample of 1H, 1H, 2H, 2H-heptadecafluorodecylacylate (10g) was placed into the container (11) within the monomer chamber (7). At this time the valves 5, 21, 23 and 33 are closed.

The plasma chamber was then rapidly (within 5 minutes) evacuated to a pressure of 2 x 10⁻³ bar by opening valves 33 and 45, and operating the pumps 29, 35 to draw air out of the chamber. The rotary pump 35 was then isolated from the system by closing the valves 33 and 45.

The plasma chamber was then heated by the heater in the walls of the process chamber (1) and a temperature of between 40-50°C, in particular 50°C was maintained.

Similarly the band heater 15 was operated to heat the monomer chamber 7 to a temperature of 45°C, and to maintain it at that temperature.

Valves 39 and 41 were then opened, as were valves 21 and 23, and helium gas from the supply (17) was drawn into the chamber (7) by the operation of the rotary pump 35 at a rate of 60sccm. In passing over the monomer, the helium gas acted as a carrier to take monomer vapour into the plasma chamber.

After a period of 2 minutes, during which any remaining air was purged from the system, the desired pressure was reached within the chamber, and an RF plasma was ignited between the electrodes. The power supply was pulsed such that the power was on for 20µs and off for 20000µs.

Gases drawn through the plasma chamber were passed out through pipe 37 and pump 35, and into the furnace 47, which was held at 300°C.

After 30 minutes, the valves 39 and 41 were closed to isolate the pump 35, and the system was vented with dry nitrogen. The pillowcase was removed, the oil and water repellency tested using 3M oil repellency Test I, (3M Test Methods Oct.1, 1988) and a water repellency test, (the 3M water repellency Test II, water/alcohol drop test, 3M Test 1, 3M Test Methods, October 1, 1998). The results, even after washing in a conventional washing machine, were water hydrophobicity values of 10 and oleophobicity values of 8.

In contrast, a pillowcase treated under similar conditions but with 200 watts of RF power at 13.56M Hz applied continuously produced a coating which was easily rubbed off.

## Claims

1. A method for depositing a polymeric material onto a substrate, said method comprising introducing a monomeric material in a gaseous state into a plasma deposition chamber in which a plasma zone has a volume of at least 0.5m³, igniting a glow discharge within said chamber, and applying a voltage as a pulsed field, at a power of from 0.001 to 500w/m³ for a sufficient period of time to allow a polymeric layer to form on the surface of the substrate.

2. A method according to claim 1 wherein the plasma zone within the chamber has a volume of about 1m³ or more.

3. A method according to claim 2 wherein the plasma zone has a volume of between 1m³ and 10m³.

4. A method according to any of claims 1 to 3 wherein the power is applied at from 0.001 to 100w/m³.

5. A method according to claim 4 wherein the power is applied at from 0.04 to 100w/m³.

6. A method according to any one of the preceding claims wherein the monomeric material is an unsaturated organic compound which comprises a chain of carbon atoms, which are optionally substituted by halogen.

7. A method according to claim 6 wherein the monomeric material is a compound of formula (I) : 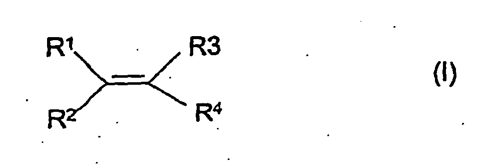 where R¹, R² and R³ are independently selected from hydrogen, alkyl, haloalkyl or aryl optionally substituted by halo;
provided that at least one of R¹, R² or R³ is hydrogen, and
R⁴ is a group X-R⁵ where R⁵ is an alkyl or haloalkyl group and X is a bond; a group of formula -C(O)O(CH₂)ₙY- where n is an integer of from 1 to 10 and Y is a bond or a sulphonamide group;
or a group - (O)ₚR⁶(O)_{q}(CH₂)ₜ- where R⁶ is aryl optionally substituted by halo, p is 0 or 1, q is 0 or 1 and t is 0 or an integer of from 1 to 10, provided that where q is 1, t is other than 0.

8. A method according to claim 7 wherein the compound of formula (I) is an acrylate of formula (III)
CH₂=CR⁷C(O)O(CH₂)ₙR⁵ (III)
where n and R⁵ as defined above in claim 7 and R⁷ is hydrogen or C₁₋₆alkyl.

9. A method according to claim 8 wherein the acrylate of formula (III) is 1H, 1H, 2H, 2H-heptadecafluorodecylacylate.

10. A method according to any one of the preceding claims wherein the monomeric compound in a gaseous state is supplied to the chamber in combination with a carrier gas.

11. A method according to claim 10 wherein the carrier gas is helium.

12. A method according to any one of the preceding claims wherein gaseous material is supplied to the chamber at a rate of of at least 1 standard cubic centimetre per minute (seem).

13. A method according to any one of the preceding claims wherein vapours of compounds of formula (I) in the chamber are maintained at pressures of from 0.01 to 300 mbar.

14. A method according to any one of the preceding claims wherein the power is pulsed in a sequence in which the power is on for 20µs and off for from 1000µs to 20000µs.

15. A method according to any one of the preceding claims wherein gas is supplied to the chamber along a temperature gradient.

16. A method according to any one of the preceding claims wherein the chamber is heated during the deposition process.

17. Apparatus for depositing a polymeric material onto a substrate, said apparatus comprises a plasma deposition chamber, at least two electrodes arranged so as to ignite a plasma within the chamber, a pump system arranged to feed monomer gas into the chamber, and power control means programmed to pulse power supplied to the electrodes so as to produce a plasma at a power of from 0.001 to 500w/m³ within a plasma zone within the chamber, said plasma zone having a volume of at least 0.5m³.

18. Apparatus according to claim 17 wherein the apparatus further comprises heating means for the chamber.

19. Apparatus according to claim 17 or claim 18 which further comprises a container for monomer, which is connected to the chamber.

20. Apparatus according to claim 19 wherein heating means are arranged to create an increasing temperature gradient between said container and said chamber.

## Patentansprüche

1. Verfahren zur Abscheidung eines Polymermaterials auf einem Substrat, wobei das Verfahren umfasst :
Einführen eines Monomermaterials in einem gasförmigen Zustand in eine Plasmaabscheidungskammer, in der eine Plasmazone ein Volumen von mindestens 0,5 m³ aufweist,
Zünden einer Glimmentladung im Inneren der Kammer und
Anlegen einer Spannung in Form eines gepulsten Feldes bei einer Leistung von 0,001 bis 500 W/m³ während einer Zeitdauer, die zur Ausbildung einer Polymerschicht auf der Oberfläche des Substrats ausreicht.

2. Verfahren nach Anspruch 1, bei dem die Plasmazone im Inneren der Kammer ein Volumen von etwa 1 m³ oder mehr aufweist.

3. Verfahren nach Anspruch 2, bei dem die Plasmazone ein Volumen von 1 bis 10 m³ aufweist.

4. Verfahren nach einem der Anspruche 1 bis 3, bei dem eine Leistung von 0,001 bis 100 W/m³ angewandt wird.

5. Verfahren nach Anspruch 4, bei dem eine Leistung von 0,04 bis 100 W/m³ angewandt wird.

6. Verfahren nach einem der vorhergehenden Ansprüche, bei dem das Monomermaterial eine ungesättigte organische Verbindung ist, die eine Kette von Kohlenstoffatomen aufweist, die wahlweise mit Halogen substituiert sind.

7. Verfahren nach Anspruch 6, bei dem das Monomermaterial eine Verbindung der Formel (I) ist, 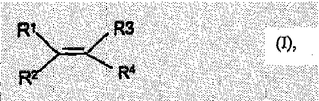 worin bedeuten.
R¹, R² und R³ unabhängig voneinander einen Substituenten, der ausgewählt ist unter Wasserstoff, Alkyl, Halogenalkyl oder Aryl, das wahlweise halogensubstituiert ist,
mit der Maßgabe, dass mindestens einer der Substituenten R¹, R² oder R³ Wasserstoff bedeutet,
und
R⁴ eine Gruppe X-R⁵, wobei R⁵ eine Alkylgruppe oder eine Halogenalkylgruppe und X eine Bindung bedeuten; eine Gruppe der Formel -C(O)O(CH₂)ₙY- , wobei n eine ganze Zahl von 1 bis 10 und Y eine Bindung oder eine Sulfonamidgruppe bedeuten; oder eine Gruppe -(O)ₚR⁶(O)_{q}(CH₂)ₜ-, wobei R⁶ Aryl, das wahlweise halogensubstituiert ist, p 0 oder 1, q 0 oder 1 und t 0 oder eine ganze Zahl von 1 bis 10 bedeuten, mit der Maßgabe, dass t nicht 0 bedeutet, wenn q gleich 1 ist.

8. Verfahren nach Anspruch 7, bei dem die Verbindung der Formel (I) ein Acrylat der Formel (III)
CH₂=CR⁷C(O)O(CH₂)ₙR⁵ (III)
bedeutet,
wobei n und R⁵ wie oben in Anspruch 7 definiert sind und R⁷ Wasserstoff oder C₁₋₆-Alkyl bedeutet.

9. Verfahren nach Anspruch 8, bei dem das Acrylat der Formel (III) 1H,1H,2H,2H-Heptadecafluordecylacrylat ist.

10. Verfahren nach einem der vorhergehenden Ansprüche, bei dem die Monomerverbindung in einem gasförmigen Zustand in Kombination mit einem Trägergas in die Kammer eingeführt wird.

11. Verfahren nach Anspruch 10, bei dem das Trägergas Helium ist.

12. Verfahren nach einem der vorhergehenden Ansprüche, bei dem das gasförmige Material mit einem Durchsatz von mindestens 1 Normkubikzentimeter (Ncm³) pro Minute in die Kammer eingeführt wird.

13. Verfahren nach einem der vorhergehenden Ansprüche, bei dem Dämpfe von Verbindungen der Formel (I) bei Drucken von 0,01 bis 300 mbar in der Kammer aufrechterhalten werden.

14. Verfahren nach einem der vorhergehenden Ansprüche, bei dem die Leistung in einer Abfolge gepulst wird, bei der die Leistung während 20 µs eingeschaltet und während 1000 bis 20000 µs ausgeschaltet ist.

15. Verfahren nach einem der vorhergehenden Ansprüche, bei dem Gas längs eines Temperaturgradienten in die Kammer eingeführt wird.

16. Verfahren nach einem der vorhergehenden Ansprüche, bei dem die Kammer während des Abscheidungsprozesses beheizt wird.

17. Vorrichtung zur Abscheidung eines Polymermaterials auf einem Substrat, die aufweist:
eine Plasmaabscheidungskammer, mindestens zwei Elektroden, die so ausgewählt sind, dass sie ein Plasma im Inneren der Kammer zünden können, ein Pumpsystem, das Monomergas in die Kammer fördern kann, und eine Leistungssteuereinrichtung, die so programmiert ist, dass sie die an die Elektroden gelieferte Leistung in der Weise pulst, dass ein Plasma bei einer Leistung von 0,001 bis 500 W/m³ innerhalb einer Plasmazone im Inneren der Kammer erzeugt wird, wobei die Plasmazone ein Volumen von mindestens 0,5 m³ aufweist.

18. Vorrichtung nach Anspruch 17, die ferner eine Heizeinrichtung für die Kammer aufweist.

19. Vorrichtung nach Anspruch 17 oder 18, die ferner einen Behälter für Monomer aufweist, der mit der Kammer verbunden ist.

20. Vorrichtung nach Anspruch 19, bei der eine Heizeinrichtung so ausgebildet ist, dass ein ansteigender Temperaturgradient zwischen dem Behälter und der Kammer erzeugt wird.

## Revendications

1. Procédé de dépôt d'un matériau polymère sur un substrat, ledit procédé comprenant l'introduction d'un matériau monomère à l'état gazeux dans une chambre de dépôt par plasma, dans laquelle la zone de plasma a un volume d'au moins 0,5 m³, l'allumage d'une décharge luminescente à l'intérieur de ladite chambre, et l'application d'une tension comme champ pulsé à une puissance comprise entre 0,001 et 500 W/m³ pendant un laps de temps suffisant pour permettre à une couche polymère de se former sur la surface du substrat.

2. Procédé selon la revendication 1, dans lequel la zone de plasma à l'intérieur de la chambre a un volume d'environ 1 m³, ou plus.

3. Procédé selon la revendication 2, dans lequel la zone de plasma a un volume compris entre 1 m³ et 10 m³.

4. Procédé selon l'une quelconque des revendications 1 à 3, dans lequel la puissance est appliquée entre 0,001 et 100 W/m³.

5. Procédé selon la revendication 4, dans lequel la puissance est appliquée entre 0,04 et 100 W/m³.

6. Procédé selon l'une quelconque des revendications précédentes, dans lequel le matériau monomère est un composé organique non saturé qui comprend une chaîne d'atomes de carbone qui sont éventuellement substitués par de l'halogène.

7. Procédé selon la revendication 6, dans lequel le matériau monomère est un composé de formule (I) : 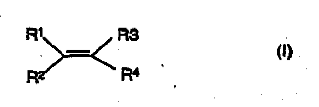 où R¹, R² et R³ sont choisis indépendamment parmi hydrogène, alkyle, haloalkyle ou aryle éventuellement substitué par un halo ; sous réserve que au moins l'un de R¹, R² ou R³ soit de l'hydrogène, et R⁴ soit un groupe X-R⁵, où R⁵ est un groupe alkyle ou haloalkyle et X est une liaison ; un groupe de formule -C(O)O(CH₂)ₙY- où n est un nombre entier compris entre 1 et 10, et Y est une liaison ou un groupe sulfonamide ; ou un groupe -(O)ₚR⁶(O)_{q}(CH₂)ₜ- où R⁶ est un aryle éventuellement substitué par un halo, p est 0 ou 1, q est 0 ou 1 et t est 0 ou un nombre entier compris entre 1 et 10, sous réserve que, lorsque q est 1, t est différent de 0.

8. Procédé selon la revendication 7, dans lequel le composé de formule (I) est un acrylate de formule (III)
CH₂=CR⁷C(O)O(CH₂)ₙR⁵ (III)
où n et R⁵ sont tels que définis ci-dessus dans la revendication 7 et R⁷ est de l'hydrogène ou un alkyle ayant de 1 à 6 atomes de carbone.

9. Procédé selon la revendication 8, dans lequel l'acrylate de formule (III) est le 1H, 1H, 2H, 2H-heptadécafluorodécylacylate.

10. Procédé selon l'une quelconque des revendications précédentes, dans lequel le composé monomère à l'état gazeux est fourni dans la chambre en combinaison avec un gaz porteur.

11. Procédé selon la revendication 10, dans lequel le gaz porteur est de l'hélium.

12. Procédé selon l'une quelconque des revendications précédentes, dans lequel le matériau gazeux est fourni dans la chambre à un débit d'au moins 1 centimètre cube standard par minute (sccm).

13. Procédé selon l'une quelconque des revendications précédentes, dans lequel les vapeurs de composés de formule (I) dans la chambre sont maintenues à des pressions comprises entre 0,01 et 300 mbars.

14. Procédé selon l'une quelconque des revendications précédentes, dans lequel la puissance est pulsée suivant une séquence dans laquelle la puissance est 'en marche' pendant 20 µs et à l'arrêt' entre 1 000 µs et 20 000 µs.

15. Procédé selon l'une quelconque des revendications précédentes, dans lequel le gaz est fourni dans la chambre le long d'un gradient de température.

16. Procédé selon l'une quelconque des revendications précédentes, dans lequel la chambre est chauffée pendant le processus de dépôt.

17. Appareil de dépôt d'un matériau polymère sur un substrat, ledit appareil comprend une chambre de dépôt par plasma, au moins deux électrodes agencées de façon à allumer un plasma à l'intérieur de la chambre, un système de pompe agencé pour alimenter en gaz monomère la chambre, et un moyen de commande de puissance programmé pour pulser la puissance fournie aux électrodes de façon à fournir un plasma à une puissance comprise entre 0,001 et 500 W/m³ à l'intérieur d'une zone de plasma, à l'intérieur de la chambre, ladite zone de plasma ayant un volume d'au moins 0,5 m³.

18. Appareil selon la revendication 17, dans lequel l'appareil comprend en outre un moyen de chauffage pour la chambre.

19. Appareil selon la revendication 17 ou la revendication 18 qui comprend en outre un conteneur pour le monomère qui est raccordé à la chambre.

20. Appareil selon la revendication 19, dans lequel le moyen de chauffage est agencé pour créer un gradient de température en augmentation entre ledit conteneur et ladite chambre.
